# EUROPEAN PATENT APPLICATION

(11) **EP 3 992 893 A1**
(43) Date of publication of application: **04.05.2022**
(21) Application number: 21190754.8
(22) Date of filing: 11.08.2021
(51) Int. Cl.: G06Q 30/02

(54) **CONDITION-BASED METHOD FOR DISPLAYING DIGITAL CONTENT, SYSTEM AND COMPUTER-READABLE STORAGE**

(30) Priority: 28.10.2020 TW 109137360
(71) Applicant: Framy Inc., Grand Cayman KY1-1208 (KY)
(72) Inventor: LI, Yu-Hsien, 116 Taipei City (TW)
(74) Representative: Viering, Jentschura & Partner mbB Patent- und Rechtsanwälte

(57) **Abstract**

A condition-based method for displaying digital content, a system, and a computer-readable storage are provided. The system provides a serving system (100) that includes a user database (105) and a content database (107), and provides an application program (50) in a user device (111, 113, 115). The method operated in the serving system (100) includes receiving location data (303) and user identification from the user device (111, 113, 115). In the serving system (100), a geographic range can be determined. After querying the content database (107), one or more location-based or personalized digital content complying with user interests and within the geographic range can be obtained. When any digital content is determined to have a priority-processing instruction, the serving system (100) transmits a linking data of the digital content to the user device (111, 113, 115). In the user device (111, 113, 115), linking icons of the digital contents are marked on the application program (50) and the digital content with the priority-processing instruction is displayed in a priority ranking.

## Description

### CROSS-REFERENCE TO RELATED PATENT APPLICATION

This application claims the benefit of priority to Taiwan Patent Application No. 109137360, filed on October 28, 2020. The entire content of the above identified application is incorporated herein by reference.

Some references, which may include patents, patent applications and various publications, may be cited and discussed in the description of this disclosure. The citation and/or discussion of such references is provided merely to clarify the description of the present disclosure and is not an admission that any such reference is "prior art" to the disclosure described herein. All references cited and discussed in this specification are incorporated herein by reference in their entireties and to the same extent as if each reference was individually incorporated by reference.

### FIELD OF THE DISCLOSURE

The present disclosure is related to a method for displaying a digital content, and more particularly to a method for displaying a digital content that can be highlighted based on a specific condition, a system and a computer-readable non-transitory storage storing a related application program.

### BACKGROUND OF THE DISCLOSURE

Since Internet and personalized electronic devices are nowadays prevalent, Internet users can not only easily acquire contents that are of interest from Internet, but also become a content provider that publish contents on a specific platform.

Social media has become one of the major sources of information for people, and a user may spend a lot of time to browse information on the social media every day. The social media can also be a platform for the user to share audiovisual contents created by the user, such that the user or his works can be followed by others.

On the other hand, a server of the social media can learn a user preference based on the user's activities or topics followed by the user on the social media. Therefore, the server can embed commercial data that matches the learned user preferences into the content to be browsed by the user.

### SUMMARY OF THE DISCLOSURE

The present disclosure is related to a condition-based method for displaying digital content, a system and a computer-readable storage that stores an application program. The method is configured to provide a digital content such as an advertisement to be displayed with a high priority under a conventional sorting rule applied to the digital contents.

In an aspect of the present disclosure, the system provides a serving system that includes a user database and a content database, and the system further provides an application program executed in a user device. The serving system performs a condition-based method for displaying digital content. In the method, the system receives a location data and a user identification from the application program executed in the user device, determines a geographic range according to the location data, queries the content database according to the geographic range and the user identification so as to acquire one or more location-based or personalized digital contents that match a user preference within the geographic range.

Next, a sequence running in the serving system determines whether any location-based or personalized digital content matches the user preference and records a priority-processing instruction within the geographic range. If the serving system obtains a digital content that records a priority-processing instruction from the one or more location-based or personalized digital contents which match the user preference within the geographic range, the one or more linking data with respect to the one or more location-based or personalized digital contents is transmitted to the user device. The application program executed in the user device is configured to mark a plurality of linking icons for each of the digital contents, and give priority to displaying the linking icon of the digital content which records the priority-processing instruction.

Preferably, when the digital contents that match the user preference are obtained by querying the content database within the geographic range, the linking icons of the digital contents can be displayed according to a sorting result in accordance with the user preference. The priority-processing instruction is configured to set up weights of priority of displaying the digital contents within the geographic range by a serving system.

Preferably, the application program can magnify or mark the linking icon of the digital content that records the priority-processing instruction, and a recommendation message can be displayed with the linking icon.

In one further embodiment of the present disclosure, for the user having advertising needs, a digital content can have a priority-processing instruction by paying a fee. For example, when two or more digital contents having the priority-processing instruction are obtained within a geographic range, a ranking of the digital contents can be determined according to an auction result.

Further, the application program initiates a graphical user interface using an electronic map as a background, and the linking data of the digital contents indicates the user-linked icons or points-of-interests-linked (POI-linked) icons shown on the electronic map.

The computer-readable storage used to store the application program can be a storage circuit in the user device. When the application program is performed, a graphical user interface is initiated to display the linking icons of the digital contents received from the serving system, and also give priority to displaying the linking icons of the digital contents recording the priority-processing instruction.

These and other aspects of the present disclosure will become apparent from the following description of the embodiment taken in conjunction with the following drawings and their captions, although variations and modifications therein may be affected without departing from the spirit and scope of the novel concepts of the disclosure.

### BRIEF DESCRIPTION OF THE DRAWINGS

The described embodiments may be better understood by reference to the following description and the accompanying drawings, in which:
Fig. 1 is a schematic diagram depicting a framework of a system for displaying a digital content according to one embodiment of the present disclosure;
Fig. 2 is a flow chart describing a process of establishing a personalized preference model according to one embodiment of the present disclosure;
Fig. 3 is a schematic diagram depicting operations of a condition processing unit in a condition-based method for displaying the digital content according to one embodiment of the present disclosure;
Fig. 4 is a flow chart describing the condition-based method for displaying the digital content according to one embodiment of the present disclosure;
Fig. 5A and Fig. 5B are schematic diagrams depicting linking icons that have priority to be displayed in the method for displaying the digital content according to one embodiment of the present disclosure; and
Fig. 6 is a schematic view of a graphical user interface that is initiated to display the digital contents in one embodiment of the present disclosure.

### DETAILED DESCRIPTION OF THE EXEMPLARY EMBODIMENTS

The present disclosure is more particularly described in the following examples that are intended as illustrative only since numerous modifications and variations therein will be apparent to those skilled in the art. Like numbers in the drawings indicate like components throughout the views. As used in the description herein and throughout the claims that follow, unless the context clearly dictates otherwise, the meaning of "a", "an", and "the" includes plural reference, and the meaning of "in" includes "in" and "on". Titles or subtitles can be used herein for the convenience of a reader, which shall have no influence on the scope of the present disclosure.

The terms used herein generally have their ordinary meanings in the art. In the case of conflict, the present document, including any definitions given herein, will prevail. The same thing can be expressed in more than one way. Alternative language and synonyms can be used for any term(s) discussed herein, and no special significance is to be placed upon whether a term is elaborated or discussed herein. A recital of one or more synonyms does not exclude the use of other synonyms. The use of examples anywhere in this specification including examples of any terms is illustrative only, and in no way limits the scope and meaning of the present disclosure or of any exemplified term. Likewise, the present disclosure is not limited to various embodiments given herein. Numbering terms such as "first", "second" or "third" can be used to describe various components, signals or the like, which are for distinguishing one component/signal from another one only, and are not intended to, nor should be construed to impose any substantive limitations on the components, signals or the like.

The present disclosure is related to a condition-based method for displaying a digital content, a system, and a computer-readable storage. The method initiates a graphical user interface (GUI) for displaying linking points of a plurality of digital contents. Preferably, the digital contents of the present disclosure are location-based digital contents in which each of the digital contents associates with a geographic location. An electronic map is one of the examples of the graphical user interface. The linking point of the location-based digital content can be represented by a linking icon that indicates a specific geographic location on the electronic map. When a user manipulates an electronic map initiated in a user device to browse the location-based digital contents within a geographic range, a serving system provides the digital contents associated to the geographic range defined by a latitudinal and longitudinal range sent by the user device, and the digital contents are represented by the linking icons marked on the electronic map.

Only a limited number of linking icons are shown in a geographic range. The serving system displays the linking icons of the digital contents on the electronic map according to a sorting result. The conditions that affect the sorting result include the number of likes, shares and follows of the digital contents, and conditions of the user. For example, the serving system can acquire the user preference according to activity data of the user. Further, the system provides additional conditions for the user to improve the ranking of a specific digital content, and these additional conditions can affect the ranking of the specific digital content. The additional conditions allow the system to enable the user to see the linking icon with respect to the specific digital content when the user browses the digital contents within a geographic range.

In an exemplary example, rather than the conventional way for attracting users to view the advertisements, e.g., a banner advertisement, by incorporating keyword advertisement or placing the advertisement on a specific position of a user interface, an advertiser can highlight a linking icon of an advertising digital content through the system for displaying the digital content according to one embodiment of the present disclosure. Therefore, the system can increase a number of clicks performed by the users. A commercial client, e.g., an individual, a company, or an organization, is able to increase a click rate of the digital content of the commercial client or other commercial clients through the system for displaying the digital content.

The condition-based method for displaying the digital content and a graphical user interface implement a social media that allows everyone to browse, interact with, produce and share the digital contents. The digital contents shared in the social media are mostly audiovisual works captured or produced by the user. Further, an audio, a piece of text, an image, a symbol, a live broadcast, a text, an activity, a marketing promotion and the like may not be excluded from the scope of the digital content. In particular, each of the digital contents shared in the social media is associated with a geographic location. For example, a video, an image, an audio or a text is created at a specific geographic location by using a mobile device. The geographic location associated with the video, the image, the audio or the text can be recorded in a metadata of the digital content. Through a user interface initiated in a user device of the display system allows the user to perform a gesture or the other input method to switch the digital contents associated with different locations. The system allows the user to switch the digital contents at the same POI, with the same hashtag(s) or in the same category by gesture.

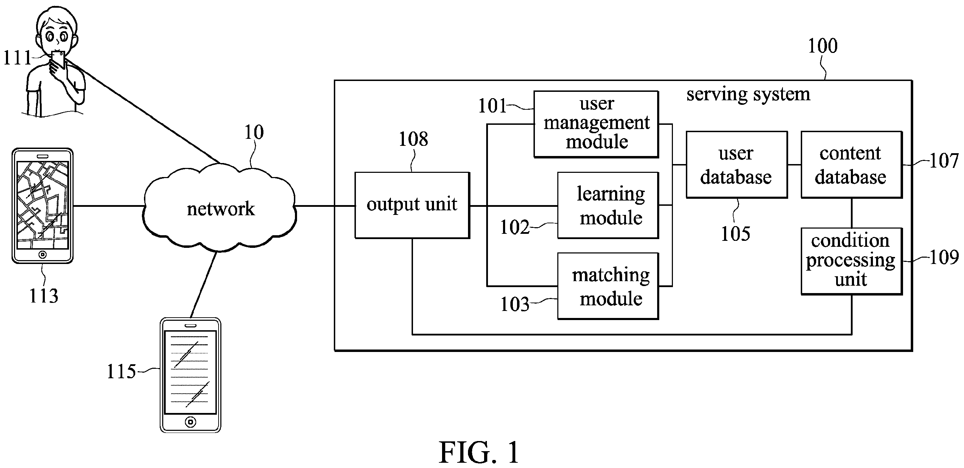

Fig. 1 is a schematic diagram depicting a framework of a system for implementing the condition-based method for displaying a digital content according to one embodiment of the present disclosure.

The system includes a serving system 100 that is embodied by cooperating software and hardware in a server. Fig. 1 shows the function modules that are implemented by software and hardware. The function modules can be operated in a server or a cluster. The function modules, listed by functions, include a user management module 101, a learning module 102, a matching module 103, a condition processing unit 109 that is used to process the conditions that affect a ranking of the digital contents, and an output unit 108 that outputs the digital contents to be queried by considering various conditions. The serving system 100 has a database that is implemented by a storage device for storing multiple digital contents provided by the users. The database can be separated into a user database 105 and a content database 107 by functions.

The user database 105 stores data of members who are registered in the system. The data of each of the members includes user identification and various data used to identify the member. Further, social data associated with the user can be marked in the database. The social data is such as friends, shares, likes and joined groups of the user. The data becomes bases provided for the system to learn a user preference. The content database 107 stores multiple digital contents that are captured, recorded, produced, and uploaded by the users. Every digital content is a location-based digital content that associates with a geographic location. Furthermore, when the content database 107 stores a digital content uploaded by a user, the system can acquire one or more hashtags that are configured by the user to associate with the digital content. The hashtags are such as "#Taipei", "#breakfast", "#restaurant", and the like. The system also acquires attributes of the digital content by recognizing a location category of a point of interest (POI), image processing or analysis. The digital content is then categorized and assigned with an additional category hashtag.

According to one embodiment of the condition-based method of the present disclosure, the content database 107 stores digital contents and correlation data of each of the digital contents. The correlation data can be hashtags, a geographic location, a category, a user that produce the digital content, and numbers of likes, shares and follows. The correlation data also records conditions that are used to change a ranking of the digital contents. The serving system 100 uses the condition processing unit 109 to process the various conditions that can affect the ranking of the digital contents. The ranking of the digital contents that are associated with a geographic range can be obtained. The serving system 100 relies on the ranking to render linking icons of different sizes displayed on an electronic map. Preferably, the sizes of the linking icons can be changed based on the ranking of the digital contents that correlate with the linking icons.

The system provides an application program executed in any of the user devices (111, 113, and 115). The application program is stored to a computer-readable storage of each of the user devices (111, 113, and 115). When a processor of one of the user devices (111, 113, and 115) executes the application program, a corresponding sequence is also in operation in the serving system 100. According to one of the embodiments of the present disclosure, the application program is executed to display a browsing page using an electronic map as a background, the browsing page allows the user to switch to a specific geographic range by a thumbnail and provides linking icons shown on the electronic map for the user to select one of the digital contents to be played. If any commercial user uses a special condition to change the ranking of the digital contents to be shown on the electronic map, the related linking icons can also be given the priority to be shown on the electronic map due to the special condition.

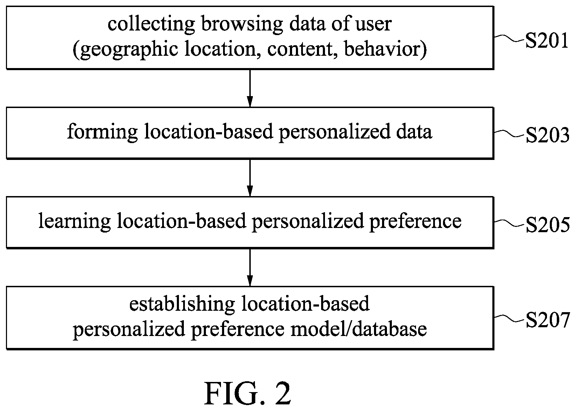

The serving system 100 includes the user management module 101 which is used to manage authentication procedure and account of the user who uses the user device (111, 113, and 115) to log on the serving system 100 via a network 10. In one of the embodiments, the serving system 100 includes a program which is used to collect user data, such as activity data of the user in a social media. The activity data can be the activities and groups joined by the user, friends of the user, the likes and shares of the user and the contents uploaded by the user. The learning module 102 of the serving system 100 learns and analyzes the user preference, and establishes the user preference in the serving system 100, as shown in Fig. 2.

Therefore, when the user logs on the serving system 100, the matching module 103 implemented by a software program in the serving system 100 actively recommends the user the digital contents. Further, the matching module 103 can also rely on the special condition to make the recommendation. The recommendation can be made based on the user preference that matches the features such as various attribute tags of the digital contents stored in a database. Finally, the recommended digital contents are provided to the application program executed in the user device (111, 113, and 115) for the user to watch.

According to one embodiment of the system for displaying the digital content of the present disclosure, the application program executed in the user device obtains positioning data generated by a positioning circuit of the user device, and multiple linking icons within a geographic range can be provided via an graphical user interface according to a current location of the user device. The linking icons can be the user-linked icons that link to the digital contents uploaded by multiple users, and the POI-linked icons that are links to the POIs provided within the geographic range. The POI-linked icons may also for linking to the digital contents uploaded by the users.

The serving system 100 includes the user database 105 that is used to record general data of a plurality of users and the data collected by the application program that is provided to be installed in the user devices (111, 113, and 115) by the serving system 100. After obtaining permission from the user, the serving system can collect the activity data of the user over a network through the application program. The activity data includes activities on various social media, search records, followed contents, browsed contents, and time itineraries of various activities of the user.

By a machine-learning algorithm, data features can be learned from the collected data, especially the data features based on the geographic location, so that a user preference that indicates personalized interests of the user is generated. When obtaining the data that is generated as the user browses a specific geographic range, the location-based or personalized digital contents that match the user preference can be provided.

Before providing the location-based or personalized digital content to the user, the serving system may firstly establish a preference for each of the users and the user preference is specifically based on geographic location. That is, when the system analyzes the geographic information correlating to the user preference, the location-based user preference with respect to each of the users can be obtained. The location-based user preference allows the system to enable each of the users to obtain the location-based or personalized digital content when the user browses a specific geographic range.

Further, reference is made to Fig. 2, which is a flow chart describing a process for forming the user preference in certain embodiments of the present disclosure.

According to one of the embodiments, in step S201, the serving system gathers browsing data of the user through a browser program executed in the user device at the user end. The features of the data are correlated to the geographic location. In an exemplary example, the user manipulates a mobile device that executes the browser program. When the user arrives at a location, the user reports or produces a video, an audio, a picture, or a text within the geographic range by a program, e.g., the browser program. The video, the audio, the picture, or the text is uploaded to the serving system. The content uploaded to the serving system includes metadata that at least records the geographic information and user identification relating to the content. It should be noted that the serving system can obtain the user identification when the user logs on the system. In step S203, the serving system analyzes the uploaded content for forming the personalized data that is configured to be stored in the user database.

In addition to establishing the user database with the digital contents, the serving system collects the activity data of the users over the network through the application programs executed in the user device. In step S205, the serving system can rely on the geographic information of the various activity data to establish the personalized data of the users. A machine-learning algorithm can be incorporated to learn the data features from the geographic data and weights with respect to the data features. In step S207, a personalized preference model that is used to define each user preference is formed for each of the users. The data features may also be combined to constitute the user preference. The serving system can accordingly rely on the user preference to provide one or more location-based or personalized digital contents. It should be noted that the data features learned through the machine-learning algorithm can be assigned with different weights according to their levels of relevance. The feature with higher relevance can be assigned with a higher weight, and the feature with lower relevance can be assigned with a lower weight. Therefore, the user preference can be accurately described.

In one embodiment of the present disclosure, the activity data collected by the serving system through the user device includes the activities on various social media, the search records, the followed contents, and the browsed contents, and the time itineraries of the activities. For example, browsing records collected by the serving system can be cookies, copies, and history records kept in a web browser. The activities on the social media are such as acts of check-ins, search records, likes, shares, follows, and replies. The information relating to the activities may include records of geographic locations. The records may cover the data of related geographies and location-based media contents. Further, when determining a level of the user preference, the serving system considers the time spent, the period of time, the frequency and length of time spent by the user browsing the content, whether or not the user shares the content to other users, and whether or not the content is produced by the user. The serving system relies on these data to establish the personalized preference model and the database. The serving system can therefore perform ranking of preferences while providing the location-based or personalized digital content to the user.

According to one of the embodiments, the serving system provides the contents to be browsed on an electronic map through the browser program executed in the user device when the user browses the content on the electronic map. Each of the contents links to a specific geographic location. When the user browses the contents, the serving system simultaneously gathers browsing records such as videos, audios, pictures, and/or texts from the user. The records include the user identification, a geographic location or a geographic range (latitude and longitude), browsing contents, and the activities (such as likes, bookmarks, shares, etc.). The records may also include tags and times assigned to the contents. The records are available to be references learned by a learning algorithm for the user preference to be formed.

In one further embodiment of the present disclosure, the browser program provided by the serving system acts as a user interface provided for the user to browse the contents. The browser program can be a web browser provided for the user to browse various contents. The browsed content and browsing record of the user may be marked with the geographic information for the learning algorithm to learn a preference of the user.

According to one embodiment of the condition-based method for displaying digital contents, any type of storage of the user device can implement a computer-readable storage that is used to store the application program provided by the system. A processor of the user device executes the application program. The application program is used to establish a connection with the serving system and transmit data such as the positioning data of the user device, the display data and the user identification. The application program also receives linking data of the one or more location-based or personalized digital contents queried by the serving system, and the linking icons that mark the digital contents. The application program also gives priority to the digital contents having the priority-processing instruction to be displayed.

The serving system provides the digital contents within a geographic range according to the positioning data generated by the user device, a display data such as a display resolution and a visible range, and a user preference. The serving system further transmits a plurality of linking icons to be displayed on a graphical user interface of the user device based on a ranking.

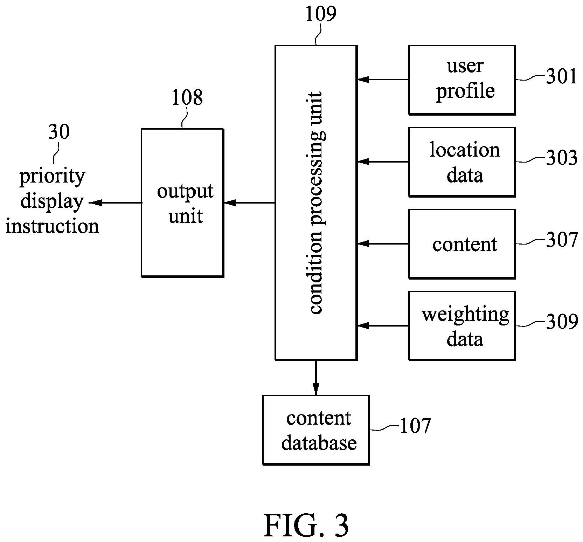

In addition to the conditions of the digital contents, the ranking of the digital contents is also based on some data of the user. Reference is made to Fig. 3, which is a schematic diagram describing a process of processing the conditions in the condition-based method for displaying the digital content in one embodiment of the present disclosure.

The condition processing unit 109 of the serving system is implemented by software or cooperated with circuits for processing the conditions that affect the ranking of the digital contents. For example, in the serving system, a user profile 301 that includes user preference data can be obtained from a user database. According to a location data 303 transmitted by the user device, the serving system can obtain the digital contents that correspond to the geographic range browsed by the user and match the user preference by querying a content database.

The content 307 of one of the conditions records some factors that will affect the ranking of the digital contents. The mentioned factors are such as whether or not the digital contents are followed, preferred, and number of views.

The serving system also allows the commercial user to prioritize a specified digital content by increasing its ranking weight by paying a price. A weighting data 309 allows the condition processing unit 109 of the serving system to raise the ranking of the digital content. For the commercial user, the above approach can achieve a purpose of promoting a specific content.

For example, when a user uses a user device to browse digital contents within a geographic range, the serving system acquires user identification (user ID) from an application program executed in the user device and then obtains a user profile 301. The serving system also acquires a geographic range browsed by the user and a display range to obtain the location data 303. The condition processing unit 109 queries the content database of the serving system and acquires the digital contents that match the conditions. The content 307 of the digital contents are referred to for the system to perform the ranking. The content 307 records the hashtags that indicate an attribute of the digital content, the objective data such as the likes, shares, follows, number of views, and a creator, and weighting data 309 with respect to the digital content. It should be noted that the weighting data 309 can raise the ranking of the digital content originally having a lower priority, and the linking icon of the digital content can be magnified or highlighted on the graphical user interface.

After the condition processing unit 109 processes the above-mentioned conditions that can affect the ranking of the digital content, an output unit 108 of the serving system outputs a priority display instruction 30 to the user device, in addition to recording the ranking of the digital content to the content database 107. The application program executed in the user device relies on the priority display instruction 30 to display the linking icon of the digital content within a geographic range on the electronic map according to the priority display instruction 30.

In an exemplary example, the serving system allows the commercial user to recommend a digital content by adjusting the weighting data of the digital content since the weighting data affects the ranking of the digital content to be displayed within the geographic range. In an aspect, the application program executed in the user device arranges a space on the electronic map for placing the linking icon of the digital content, or alternatively a recommendation note can also be added. When the user zooms in or zooms out the geographic range of the electronic map by performing a gesture via the application program, the serving system can still give the priority of the digital content to be displayed on the electronic map due to the weighting data 309 for attracting the users to click and view the digital content.

Furthermore, since the weighting data 309 of two or more digital contents may be adjusted to have different rankings within a geographic range at the same time, the serving system accordingly provides an auction mechanism that can prioritize displaying the linking icon of the digital content with a higher weight, or display the linking icons of the digital contents with different sizes for indicating their different weights.

According to one of the embodiments of the present disclosure, the linking icons of the digital contents within the same geographic range can be dynamically changed since the different linking icons may be shown on the electronic map at each time when the same geographic range is refreshed. It should be noted that the linking icons shown within the geographic range is refreshed when any new digital content is uploaded to this geographic range by any user, or when the interest of the user who visits the geographic range is changed. In an exemplary example, the serving system constantly updates the data such as the data of user preference and the state of digital contents within every geographic range, therefore, the linking icons and the linked contents is updated at each time when the geographic range is refreshed.

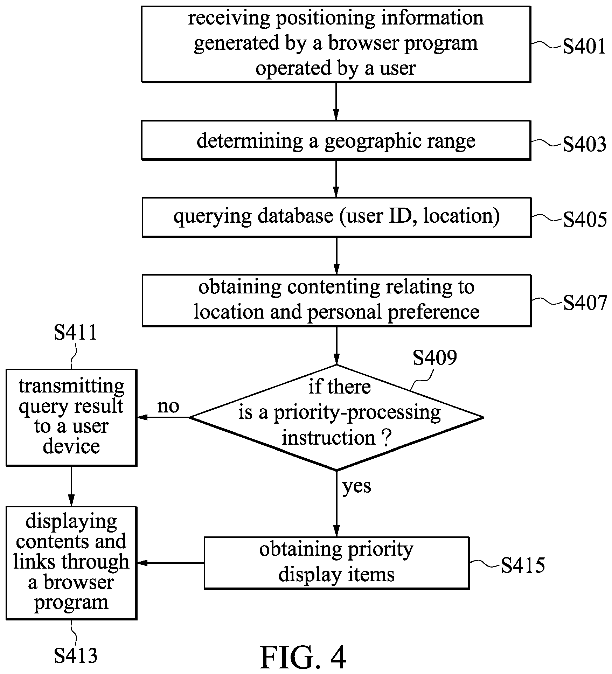

Fig. 4 is a flow chart describing the condition-based method for displaying digital content in certain embodiments of the present disclosure.

When completing the analysis of the user preference and establishing the personalized preference model and the database, the serving system accordingly provides the digital contents. The process described in Fig. 4 is operated between the serving system and the application program stored in the computer-readable storage of the user device.

In the beginning, the user manipulates the browser program to browse the contents displayed on a graphical user interface that is based on an electronic map, or browse the contents containing geographic information displayed on a user interface that is not based on an electronic map. The graphical user interface includes links that link to videos, audios, pictures, and/or texts. The links can be shown as pictures representing the user that allow the user to click on. The contents linked to the links are the aforementioned digital contents. In particular, the browser program may generate location information according to the geographic location browsed. For example, the browser program based on an electronic map displays a map of a geographic range according to a geographic location. The location information with the user ID sent to the serving system may represent a longitude and latitude of a central location of the geographic range (step S401).

In the serving system, the geographic range is determined according to the geographic location received from the end user computer device (step S403). According to one of the embodiments, when the user manipulates the browser program using an electronic map as a background to browse a specific geographic location, the browser program transmits the geographic location or a related range to the serving system. The serving system can accordingly provide the location-based or personalized digital contents to the user. In another embodiment, the browser program can be a video or text browser. The content to be browsed through the browser program still includes the information for the serving system to determine the geographic location. For example, the metadata of the content records the geographic information. Similarly, the serving system retrieves the location information of the contents from the browser program and accordingly provides the location-based or personalized digital contents. In one further embodiment, the user device manipulated by the user can be a mobile device and the browser program executed in the mobile device can retrieve the location information from the signals generated by a sensor (a GPS sensor) or a wireless network module of the mobile device. The location information generated by the aforementioned schemes, after being sent to the serving system, allows the serving system to provide the location-based or personalized digital contents according to the location of the mobile device.

Under a circumstance of application, an application program executed in a user device allows the user device to link to the serving system, and the serving system receives the user identification through the browser program when the user signs into the system. The serving system can also obtain a browsing range of the user device so as to determine a geographic range. The serving system provides the location-based or personalized digital content based on the geographic range since the user preference may be changed with respect to changes in the size of the geographic range. Further, the quantity of contents provided to the user may also be changed due to restrictions such as limitations (a screen size and resolution, etc.) of the display.

Next, according to the data received from the user device, the serving system queries the database according to the geographic range and/or the user identification (step S405). It should be noted that the database records the videos, audios, pictures, and/or texts that are uploaded by users using user devices to report or produce the location-based contents. In the serving system, correlations among the contents, the related geographic locations, and the user identification are established. By querying the database, the personalized preference model that is obtained by learning the user preference can be applied to the data received from the user device so as to obtain the location-based personalized contents from the database (step S407).

Before a query result is provided, such as in step S409, the serving system acquires the location-based and personalized digital content that match the conditions relating to the location and the user preference, and determines whether or not any digital content records the priority-processing instruction.

If there is no digital content that matches the user preference within the geographic range records the priority-processing instruction, then no digital content has the priority to be displayed, and the serving system performs ranking according to general information of the digital contents. The serving system acquires the linking data of the location-based digital contents that match the user preference within the geographic range when the query result is generated and transmitted to the user device (step S411). The application program executed in the user device receives the linking data of one or more personalized digital contents from the serving system. Afterwards, the application program marks the linking icons and the linking data on the electronic map shown on the user device (step S413). On the contrary, if any digital content has the priority-processing instruction within the geographic range, the digital content is given the weight with priority to be displayed. For example, the digital content having the priority-processing instruction can be the digital content in an advertisement auction result or the digital content in the period of the remainder of an advertisement campaign. The serving system accordingly receives the digital content having the priority to be displayed (step S415). After the query result is transmitted to the user device, the application program executed in the user device marks the linking icons and the data of the digital contents based on a ranking and the priority-processing instruction. Particularly, the application program magnifies or marks the linking icons of the digital contents that record the priority-processing instruction (step S413).

In the abovementioned step S409, when the serving system acquires multiple digital contents that match the conditions, i.e., the same geographic range, user preference, and/or weighting data, etc., in one embodiment of the present disclosure, the multiple links with respect to the digital contents can be sorted by the user preference and the weighting data learned by the serving system and displayed on the electronic map according to a ranking. In one further embodiment, the links with respect to the location-based personalized contents sorted by the user preference and the weighting data learned by the serving system can be displayed on a video or a text browser in a list or in a specific way. The links displayed on the list can be represented as texts, symbols, or icons marked on a user interface. The links can also be sorted by geographic addresses. The digital contents can be updated when the user modifies the browsed content and the geographic information generated.

It should be noted that, even though the serving system can give priority to displaying the digital content that records the priority-processing instruction in step S415, the linking icon of the digital content may not be displayed within the geographic range with a high priority after ranking since the weighting value of the digital content is still smaller than the weighting values of other digital contents within the same geographic range.

According to one embodiment of the disclosure, when the user uses the browser program to browse a specific geographic location, the serving system not only gathers the user's browsing records, but also continuously analyzes and learns from new browsing records. In other words, the serving system continuously collects the user's browsing records so as to learn and update the personalized preference model specified to the user. The serving system can therefore provide the digital content that meets the user preference more accurately. The contents can be various video/audio contents and/or commercial information, e.g., advertisements. That is, besides the content-linked icons can be displayed at priority by adjusting the weights, the method allows the system to provide the contents according to the location-based user preference since the personalized user preference may be different at different locations.

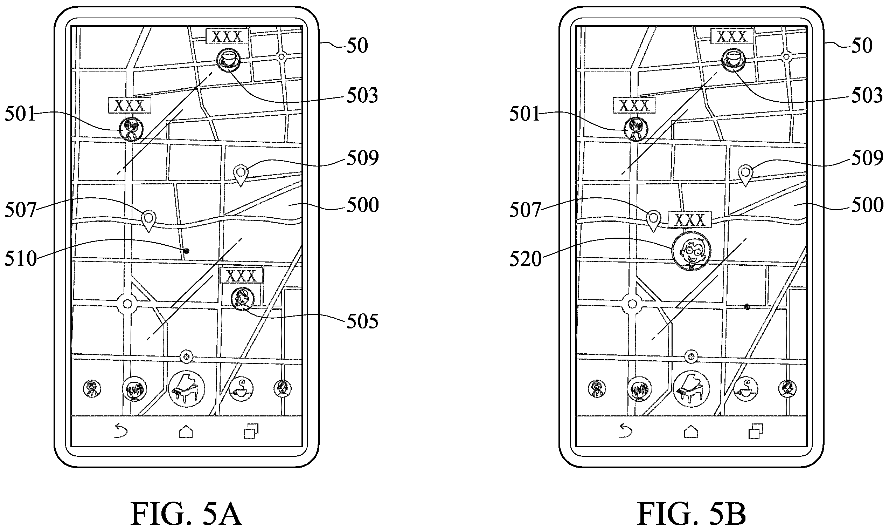

Fig. 5A and Fig. 5B are schematic diagrams depicting that the linking icons are displayed with higher priority in the condition-based method for displaying a digital content according to one embodiment of the present disclosure.

A user interface initiated in the user device is such as an exemplary graphical user interface shown in Fig. 5A. An application program 50 executed in the user device initiates the graphical user interface that renders a picture showing the linking icons based on a ranking. An electronic map 500 shown on the graphical user interface is used as a background. At least two types of linking icons are shown in the diagrams. User-linked icons 501, 503, and 505 denote the links of location-based digital contents that are created at different locations within a geographic range. The links link to addresses of the digital contents in a database of the serving system. POI-linked icons 507 and 509 denote the POIs within the geographic range. For example, the POIs form a plurality of landmark locations on the electronic map 500. The landmark locations can be attractions, companies, government agencies, restaurants, and check-in locations that generally form the marks as seen on an electronic map. The linking icons link to addresses of the digital contents in the database.

The contents that associate with the user-linked icons 501, 503, and 505 and the POI-linked icon 507 and 509 shown on the electronic map 500 are the digital contents that match the user preference. Further, the digital contents that are shown are contents among the top rankings. A content linking point 510 schematically shown on the electronic map 500 can be a user-linked icon or a POI-linked icon. The content linking point 510 may have a lower ranking in an original state and therefore is marked as a linking point. An address associated with the content linking point 510 links to a digital content in the content database. When a weight which is one of the ranking conditions of the digital content that associates with the content linking point 510 is re-configured to raise the ranking within the geographic range of electronic map 500, a user-linked icon 520 is given a high priority to be displayed on the electronic map 500, as shown in Fig. 5B. The user-linked icon 520 can be highlighted by magnifying the linking icon, or alternatively displaying a text of recommendation.

The condition-based method for displaying the digital content is able to raise the ranking of the digital contents by adjusting the weights for the digital contents having lower rankings. Therefore, the digital content can be recommended by having its weight adjusted. With an advertisement as an example, the serving system provides a commercial user an advertisement space on the electronic map to recommend a product or a service. The commercial user can pay an additional fee to an operator of the serving system to adjust a weight of a digital content. Afterwards, when a user browses digital contents within a specific geographic range, the serving system can acquire the digital contents within the geographic range and check whether or not any digital content within the geographic range is with a priority-processing instruction. If any digital content is determined to be with the priority-processing instruction, the linking icons of the digital contents with the highest or higher ranking can be magnified or marked on the electronic map, or alternatively a recommendation message can be displayed with the linking icon. The highlighted linking icons achieve an effect that the digital contents are given the priority to be shown for the user, so that the recommended products or services can be greatly exposed and can effectively reach target customers.

In addition to personalized conditions, when obtaining the digital contents to be displayed within a geographic range from the digital contents in the database, the weights assigned to the digital contents can be changed for affecting the ranking by paying a fee or based on an auction result. According to one embodiment of the present disclosure, when the commercial user asks for an advertisement, the commercial user can set up a geographic location for exposing the digital content and times of the exposure according to a budget via a management interface provided by the serving system. Therefore, the ranking of the related digital content can be changed by paying a fee so that the digital content can be with the priority-processing instruction.

In one further embodiment of the present disclosure, when the advertisement is set up and delivered, the serving system provides an auction campaign if another commercial user also pays for changing the ranking of his digital content within the same geographic range. That is, when two or more digital contents having the priority-processing instruction are obtained within the geographic range, a ranking there-between can be determined according to an auction result. The commercial user who pays the higher price can keep the advertisement space. Further, the auction campaign for the advertisement space is a dynamic procedure. The auction result can be a factor for changing the ranking if the conditions for affecting the ranking of the digital contents are the same. The different prices submitted by the commercial users may constantly affect the state of the linking icons shown on the electronic map.

It should be noted that the contents affecting the ranking of the digital contents are not limited to the fees, and the system can still refer to conditions such as whether the commercial users are chosen, whether the types of the digital contents are qualified, or the like, and change the priority to be displayed.

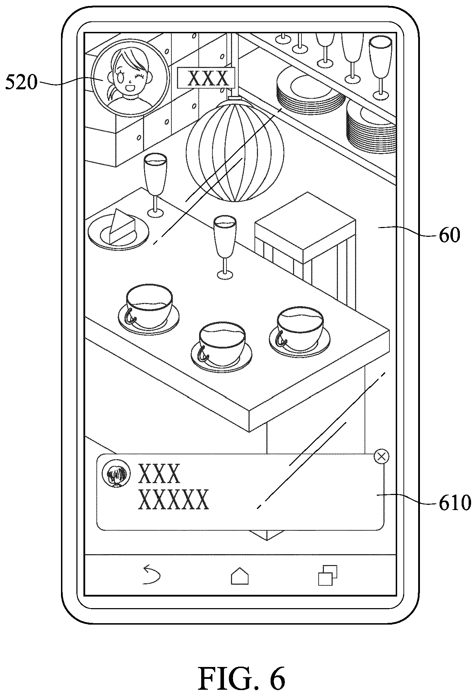

Reference is made to Fig. 6, which is a schematic diagram depicting a graphical user interface used to play the digital content according to one embodiment of the present disclosure.

When a user selects one of the linking icons, the application program executed in the user device acknowledges a selection, and initiates and show another user interface referring to an exemplary example shown in Fig. 6. A graphical user interface is initiated in the method as an interface to play a digital content. One or more selectable user-linked icons 520 are shown in the graphical user interface, and another interface is initiated to play a digital content 60. If the linking icon is associated with multiple digital contents linked to the same or different users, then the digital contents can be played sequentially.

When the user selects the digital content having the priority-processing instruction, such as the digital content for a purpose of advertisement, a message block 610 used to show an advertisement message provided by a commercial user is shown on a page that is configured to play the digital content 60.

In another display mode different from the above described method for playing the digital content, when the user selects one of the linking icons shown on the graphical user interface, the application program initiates a digital content display zone providing several blocks. One of the blocks is such as a content preview zone provided for the user to preview the digital content. The linking icons of the digital contents can be the above-mentioned user-linked icons or the POI-linked icons, and may include the advertisement message.

In conclusion, according to the above embodiments of the condition-based method for displaying a digital content and the system, the linking icons associated with the location-based or personalized digital contents are displayed on a graphical user interface based on a ranking of the digital contents. The method also allows the user to change the weight of the digital content for changing the priority to display the digital content so as to achieve a condition-based digital content display effect.

The foregoing description of the exemplary embodiments of the disclosure has been presented only for the purposes of illustration and description and is not intended to be exhaustive or to limit the disclosure to the precise forms disclosed. Many modifications and variations are possible in light of the above teaching.

The embodiments were chosen and described in order to explain the principles of the disclosure and their practical application so as to enable others skilled in the art to utilize the disclosure and various embodiments and with various modifications as are suited to the particular use contemplated. Alternative embodiments will become apparent to those skilled in the art to which the present disclosure pertains without departing from its spirit and scope.

## Claims

1. A condition-based method for displaying digital content, comprising:
receiving a location data (303) and a user identification from an application program (50) executed in a user device (111, 113, 115);
determining a geographic range according to the location data (303);
querying a content database (107) according to the geographic range and the user identification so as to acquire one or more location-based or personalized digital contents that match a user preference within the geographic range;
obtaining one of the digital contents that records a priority-processing instruction from the one or more location-based or personalized digital contents that match the user preference within the geographic range; and
transmitting the one or more linking data with respect to the one or more location-based or personalized digital contents to the user device (111, 113, 115), wherein the application program (50) is configured to mark a plurality of linking icons for each of the digital contents, and prioritize displaying the linking icon of the digital content that records the priority-processing instruction.

2. The method according to claim 1, wherein, when a plurality of digital contents that match the user preference are obtained by querying the content database (107) within the geographic range, the linking icons of the plurality of digital contents are displayed according to a sorting result in accordance with the user preference.

3. The condition-based method according to claim 2, wherein the priority-processing instruction is configured to set up weights of priority of displaying the digital contents within the geographic range by a serving system (100); and the application program (50) magnifies or marks the linking icon of the digital content that records the priority-processing instruction, and a recommendation message is displayed with the linking icon.

4. The condition-based method according to claim 3, wherein a fee is paid so that the digital content obtains the priority-processing instruction.

5. The condition-based method according to any of claim 1 to claim 4, wherein, when two or more digital contents having the priority-processing instruction are obtained within the geographic range, a ranking there-between is determined according to an auction result.

6. The condition-based method according to any of claim 1 to claim 4, wherein the geographic range is determined according to the location data (303) and also based on a browsing range initiated by the application program (50) executed in the user device (111, 113, 115).

7. The condition-based method according to any of claim 1 to claim 4, wherein the application program (50) initiates a graphical user interface using an electronic map (500) as a background, and the linking data of the digital contents indicates the linking icons shown on the electronic map (500).

8. A system, comprising:
a serving system (100) having a user database (105) and a content database (107); and
an application program (50) executed in a user device (111, 113, 115);
wherein the serving system (100) performs a condition-based method for displaying digital content, and the condition-based method includes:
receiving a location data (303) and a user identification from the application program (50) executed in the user device (111, 113, 115);
determining a geographic range according to the location data (303);
querying the content database (107) according to the geographic range and the user identification so as to acquire one or more location-based or personalized digital contents that match a user preference within the geographic range;
obtaining one of the digital contents that records a priority-processing instruction from the one or more location-based or personalized digital contents that match the user preference within the geographic range; and
transmitting the one or more linking data with respect to the one or more location-based or personalized digital contents to the user device (111, 113, 115), wherein the application program (50) is configured to mark a plurality of linking icons for each of the digital contents, and give priority to displaying the linking icon of the digital content that records the priority-processing instruction.

9. The system according to claim 8, wherein, when a plurality of digital contents that match the user preference are obtained by querying the content database (107) within the geographic range, the linking icons of the plurality of digital contents are displayed according to a sorting result in accordance with the user preference, and the priority-processing instruction is configured to set up weights of priority of displaying the digital contents within the geographic range by a serving system (100).

10. The system according to claim 9, wherein, when a fee is paid so that the digital content obtains the priority-processing instruction.

11. The system according to any of claim 8 to claim 10, wherein, when two or more digital contents having the priority-processing instruction are obtained within the geographic range, a ranking there-between is determined according to an auction result.

12. A computer-readable storage, which is a storage device of a user device (111, 113, 115), storing an application program (50), wherein the application program (50) is executed by a processor of the user device (111, 113, 115) for performing steps of:
generating a location data (303) and transmitting the location data (303) and a user identification to a serving system (100), wherein the serving system (100) determines a geographic range according to the location data (303) and queries a content database (107) according to the user identification, so as to acquire one or more location-based or personalized digital contents that match a user preference within the geographic range; afterwards, the serving system (100) determines whether or not any of the one or more location-based or personalized digital contents records a priority-processing instruction;
receiving one or more linking data with respect to the one or more location-based or personalized digital contents from the serving system (100) and the application program (50) marking corresponding linking icons of the one or more digital contents; and
when the one or more location-based or personalized digital content records the priority-processing instruction, the linking icons of the digital contents recording the priority-processing instruction being displayed with a high priority.

13. The computer-readable storage according to claim 12, wherein the application program (50) initiates a graphical user interface using an electronic map (500) as a background, the linking data of the digital contents indicates the linking icons shown on the electronic map (500), the application program (50) magnifies or marks the linking icon of the digital content that records the priority-processing instruction, and a recommendation message is displayed with the linking icon.

14. The computer-readable storage according to claim 13, wherein the application program (50) magnifies or marks the linking icon of the digital content that records the priority-processing instruction, and the recommendation message is displayed with the linking icon.

15. The computer-readable storage according to any of claim 12 to claim 14, wherein the serving system (100) determines the geographic range according to the location data (303) and also based on a browsing range initiated by the application program (50) executed in the user device (111, 113, 115).
